# EUROPÄISCHE PATENTANMELDUNG

(11) **EP 2 602 738 A2**
(43) Veröffentlichungstag der Anmeldung: **12.06.2013**
(21) Anmeldenummer: 12196069.4
(22) Anmeldetag: 07.12.2012
(51) Int. Cl.: G06F 21/34, G06F 21/85

(54) **Vorrichtung zum Schutz von Sicherheitstoken gegen Malware**

(30) Priorität: 08.12.2011 DE 102011056191
(71) Anmelder: Wincor Nixdorf International GmbH, 33106 Paderborn (DE)
(72) Erfinder: Krummel, Volker Dr., 33098 Paderborn (DE)
(74) Vertreter: 2K Patentanwälte Blasberg Kewitz & Reichel

(57) **Zusammenfassung**

Sicherheitstoken (10) für die Authentifizierung eines Zugriffs auf ein SB-Terminal, umfassend eine Schnittstelle (14) für eine Verbindung zum SB-Terminal, umfassend Authentifizierungsinformationen (11,12),
gekennzeichnet durch eine zweite Schnittstelle (15), die einen Anschluss eines Speichersticks erlaubt, dessen Inhalt dem SB-Terminal zur Verfügung gestellt wird, wobei der Zugriff auf den Speicherstick in Abhängigkeit von den Authentifizierungsinformationen erfolgt.

## Beschreibung

Die Erfindung betrifft ein System zum Authentifizieren eines Benutzers bei einer Datenverarbeitungsanlage. Insbesondere dient die Erfindung zum Authentifizieren eines Benutzers an einem Geldmitteltransaktionsgerät, SB-Automaten oder Geldautomaten (ATM). Bei Datenverarbeitungsanlagen, insbesondere bei Datenverarbeitungsanlagen, die Bestandteil eines Geldmitteltransaktionsgerätes sind, müssen eine Vielzahl von Sicherheitsaspekten berücksichtigt werden, um sicherzustellen, dass diese Datenverarbeitungsanlagen nicht von Unbefugten manipuliert werden können. Besonders die Übertragung von Daten, insbesondere von Programmdaten, von einem Wechseldatenträger zur Datenverarbeitungsanlage, sowie von Daten von der Datenverarbeitungsanlage zu einem mit dieser Datenverarbeitungsanlage verbundenen Wechseldatenträger, sollte bei unbefugten Benutzern sicher verhindert werden. Hierbei ist sicherzustellen, dass keinerlei "infizierte" Speichermedien genutzt werden, die z.B. einen Virus übertragen können.

### Überblick über die Erfindung:

Bei Geldmitteltransaktionsgeräten ist eine solche Datenübertragung schon aus Sicherheitsgründen für nicht berechtigte Benutzer zu unterbinden, um Datenschutzerfordernisse einzuhalten und Manipulationen zu unterbinden. Bekannte Geldmitteltransaktionsgeräte können insbesondere Selbstbedienungssysteme sein, die eine Vielzahl elektronischer Komponenten umfassen. Solche Komponenten sind beispielsweise eine Geldausgabeeinheit/Geldeinzahleinheit, eine Tastatur, ein Kartenlese- und Schreibgerät, sowie weitere Peripheriegeräte. Diese einzelnen Komponenten sind mit der Datenverarbeitungsanlage des Geldmitteltransaktionsgerätes über Kommunikationsschnittstellen und Datenleitungen verbunden. In der Regel handelt es sich um PCs, die mit Standardschnittstellen (USB, Firewire etc) ausgerüstet sind und auf denen Standardbetriebssysteme laufen, die speziell überwacht und gesteuert werden. Jede dieser Komponente verarbeitet und erzeugt Daten, insbesondere Betriebsprotokolle, Tracedaten und Fehlerinformationen. Üblicherweise werden diese Daten in einen Speicherbereich eines Permanentspeichers der Datenverarbeitungsanlage, insbesondere eines Festplattenspeichers der Datenverarbeitungsanlage, gespeichert. Aus vielfältigen Gründen ist es sinnvoll, diese Daten auf einer weiteren Datenverarbeitungsanlage, insbesondere zentral beim Hersteller des Geldmitteltransaktionsgerätes zu verarbeiten und dabei zu analysieren. Eine Analyse dieser Daten kann beispielsweise auch auf einem Laptop-Computer eines Servicetechnikers mit geeigneter Software durchgeführt werden. Dabei kann es erforderlich sein, diese Daten mit Hilfe eines steckbaren Flashspeichers, wie einem Flashspeicher mit einer integrierten USB-Schnittstelle, einem sogenannten USB-Stick, von der Datenverarbeitungsanlage eines Geldmitteltransaktionsgerätes zu der weiteren Datenverarbeitungsanlage, wie dem Laptop-Computer des Servicetechnikers, zu übertragen. Dazu werden die relevanten Daten von der Datenverarbeitungsanlage des Geldmitteltransaktionsgerätes in einen Speicherbereich des steckbaren Flashspeichers kopiert oder bewegt. Jedoch ist eine solche Datenübertragung bei herkömmlichen Datenverarbeitungssystemen nicht gesichert, sodass jede Bedienperson, die Zugang zur Datenverarbeitungsanlage des Geldmitteltransaktionsgerätes hat, diese Daten kopieren kann. Dadurch kann eine missbräuchliche Nutzung dieser Daten nicht ausgeschlossen werden. Ferner sollte auch beim Übertragen von in einem Speicherbereich des steckbaren Flashspeichers gespeicherten Daten zur Datenverarbeitungsanlage des Geldmitteltransaktionsgerätes sichergestellt werden, dass diese Datenübertragung nur für autorisiert Benutzer gestattet ist (Details sind der DE 102007019541 _A1 zu entnehmen, deren Inhalt hierin aufgenommen wird). Gleiche Probleme treten auf, wenn anstelle des steckbaren Flashspeichers andere Wechseldatenträger genutzt werden. Auch zum Einräumen weiterer Benutzerrechte bei einer Datenverarbeitungsanlage ist eine sichere Authentifizierung eines Benutzers erforderlich, um diesem Benutzer voreingestellte Benutzerrechte einzuräumen. Diese Benutzerrechte können insbesondere das Ausführen von Anwendungsprogrammen, mit denen sicherheitsrelevante Einstellungen des Geldmitteltransaktionsgerätes geändert werden können, oder die auf andere Art und Weise eine Manipulation des Geldmitteltransaktionsgerätes beeinflussen und/oder den sicheren Betrieb des Geldmitteltransaktionsgerätes beeinträchtigen können, verhindern.

Für ein ganzheitliches Konzept zur Absicherung eines ATMs ist es in verschiedenen Szenarien notwendig, Technikern autorisierten Zugang zu den internen Komponenten zu ermöglichen. Beispiele für derartige Eingriffe können u.a. folgende Einsatzszenarien bilden:
1) Austausch von einzelnen Hardware-Komponenten
2) Update von Software
3)Ausführen anderer Funktionen, die eine spezielle Autorisierung benötigen (z.B. Austausch von Schlüsseln)

In all diesen Szenarien sollen folgende Eigenschaften erfüllt werden:
1) Prüfung der Autorisation; Es soll auf jeden Fall verhindert werden, dass nicht autorisierte Benutzer, diese Funktionalität nutzen können. Um dies sicherstellen zu können, müssen kryptographische Funktionen verwendet werden, um Missbrauch effektiv verhindern zu können.
2) Keine / wenige Abhängigkeiten zu anderen Bedingungen; die Definition anderer, gebietsfremder Bedingungen, wie die Abfrage der Tresortür, führt zu weitreichenden Abhängigkeiten, die die Verwaltung derartiger Einsätze verkomplizieren. Dies führt zur Fehleranfälligkeit und damit zu hohen Kosten im Service und der Unterhaltung von Systemen.
3) Feingranulare Gewährung von Rechten; das System sollte derart flexibel sein, dass für spezifische Funktionen auch feingranular Rechte vergeben werden können. Die Verwaltung der Rechte sollte zentral geschehen, um jederzeit den Überblick über den aktuellen Stand nachvollziehen zu können.
4) Nachverfolgbarkeit von Aktionen; Im Nachhinein sollte nachvollziehbar sein, welche Aktion wann ausgeführt wurde, wer diese Aktion ausführte und mit welchem Ergebnis diese Aktion abgeschlossen wurde. Insbesondere bedeutet dies, dass die Autorisation individuell für jeden Benutzer erfolgen muss.

All diese oben beschriebenen Eigenschaften erfordern die Verwendung eines speziellen Sicherheitstokens wie z. B. den CrypTa-Stick, der über die USB-Schnittstelle mit dem PC verbunden wird.

Ein Security-Token (einfach: Token oder Sicherheits-Token) ist eine Hardwarekomponente zur Identifizierung und Authentifizierung von Benutzern.

Der unmittelbare Besitz des Tokens ist hierbei zwingend erforderlich, um sich als berechtigter Nutzer auszuweisen.

Mit den Begriffen elektronischer Schlüssel oder Chipschlüssel wird ein Token ebenfalls bezeichnet.

Gegebenenfalls sind gegen Missbrauch weitere Merkmale zur Authentifizierung heranzuziehen, möglich sind u. a. die Kenntnis eines Passworts bzw. einer PIN oder biometrische Merkmale des Benutzers (Fingerprint Scanner im USB-Stick). Security-Token können personalisiert sein, sie sind dann eindeutig einem bestimmten Benutzer zugeordnet. Der technische Überbegriff Token bezeichnet alle eingesetzten Technologien gleichermaßen und hängt nicht von einer bestimmten Erscheinungsform der Hardware ab. Dazu gehören alle Gegenstände, die Informationen zum Zweck der Identifikation und Authentifizierung speichern und übertragen können. Bei Smartcards handelt es sich ebenfalls um Token. USB-Token, welche an einem USB-Port angeschlossen werden, weisen die Vorteile einer Smartcard auf, ohne dabei ein Kartenlesegerät zu benötigen.

Es gibt auch Token mit oder ohne Kontakte,. Als zusätzliche Sicherheitsmerkmale muss häufig eine PIN und/oder ein Anforderungscode in das Gerät eingegeben werden.

Grundsätzlich läuft der Authentifizierungsprozess (schematisch) wie folgt ab:
1.Der Nutzer leitet den Datenaustausch zwischen Token und Prüfsystem ein, indem er z. B. den Token vor ein Lesegerät hält bzw. in das System einsteckt.
2. Das Lesegerät identifiziert den Token über dessen eindeutige Identifikationsnummer(n), wie dessen Typennummer, eine Medien-Seriennummer, eine Träger-Registriernummer und/oder eine Benutzer-Klassennummer.
3. Der von dem Token gelesene Datensatz wird vom Prüfsystem mit entsprechenden lokalen Referenzdaten nach einem wohl definierten Prüfverfahren verglichen: Die Authentifizierung des Tokens erfolgt mittels Challenge-Response-Authentifizierung, eventuell werden hierfür weitere Prüfdaten als zusätzliche Sicherheitsmerkmale, etwa eine PIN vom Träger des Token abgefragt, oder auch z.B. ein Fingerabdruck.
4. Zur Sicherheit können die lokalen Referenzdaten mit weiteren Referenzdaten aus einer Datenbank von einem entfernten Server(z. B. über eine Standleitung oder eine geschützte Wählleitung) verglichen werden.
5. Bei ungültigem Token oder ungültigen weiteren Referenzdaten weist das Prüfsystem weitere Zugriffe ab.
6. Zur Rückverfolgung der Authentifizierung werden Ereignisdaten des Prüfvorgangs an den Server zurück übermittelt.
7. Das Prüfsystem gibt die für den Träger des Token zulässige Benutzung, wie Funktionen und/oder Daten frei.

Um den Technikereinsatz zu vereinfachen wurde bisher dem Stick ausreichend Flash-Speicher mitgegeben, um z.B. Analyse-Programme zur Hand zu haben bzw. auch um Log-Files von Automaten abziehen zu können.

Durch die Bereitstellung von derartigem Speicher entsteht jedoch das Problem, das sich potentielle Malware über den Sicherheitstoken auf die Automaten übertragen kann, bzw. direkt vom Token aus eine Schadfunktion ausführen kann. Definiert man den Token als notwendig für die autorisierte Ausführung bestimmter Aktionen, führt dies zu einem Konflikt bzgl. der Sicherheitsanforderungen.

Auch wenn dem Benutzer die Verwendung des Speichers untersagt wird, kann Malware diesen Speicher unerkannt nutzen. Rechtliche Konsequenzen für den Hersteller sind in einem derartigen Umfeld nicht auszuschließen.

### Überblick über die Erfindung:

Die Aufgabe der vorliegenden Erfindung liegt in der Lösung der o.g. Probleme, so dass der Token keinerlei schadhafte Software übertragen kann.

Der Vorschlag zur Lösung dieses Problems ist das Design eines Security-USB-Tokens ohne fest eingebauten Speicher.

Das Token verfügt über die komplette Sicherheitsfunktionalität, bietet aber keinerlei extern zugreifbaren Speicher. Um dem Techniker dennoch die Möglichkeit zu geben, Daten zu übertragen, verfügt dieses Token optional über einen eigenen kleinen USB-Hub, der das Einstecken eines beliebigen Speichersticks ermöglicht. Der Sicherheitstoken ist somit lediglich ein Aufsatz auf einen regulären Speicherstick, um auch die Sicherheitsfunktionalitäten ausführbar zu machen. Der Vorteil dieses Ansatzes ist, dass die Sicherheitsfunktionalitäten sicher gestellt werden können, ohne die Gefahr eines Malware Angriffes in Kauf nehmen zu müssen. Optional kann aber der Techniker einen regulären USB-Speicherstick verwenden.

Zur Absicherung des optionalen Speichers gegen Malware werden folgende Maßnahmen unternommen:
1) Das Security Token verfügt über einen Mechanismus, die Lese- bzw. Schreibrechte auf dem Speicherstick zu verwalten. Die Steuerung erfolgt mittels Sicherheitstokens.
   Das Sicherheitstoken gibt den Speicher nur dann zum Lesen frei, wenn eine Autorisierung dieses Vorgangs erfolgt. Hierzu kann auf bereits etablierte kryptographische Verfahren wie z.B. Challenge-Response mit einem Server oder dem Benutzer, digitale Signaturen etc. zurückgegriffen werden.
2) Als weitere Verfeinerung können Mechanismen verwendet werden, die Daten nur an den optionalen Speicherstick weiterleiten, wenn sie korrekt signiert sind. Dies würde Dateien aus unsicheren Quellen wirksam unterbinden.
3) Zusätzlich kann der optionale Speicher in dem Security-Token verschlüsselt werden, um auch die Geheimhaltung der Daten sicher zustellen.

Im Einzelnen handelt es sich um einen Sicherheitstoken für die Authentifizierung eines Zugriffs auf ein SB-Terminal, umfassend eine Schnittstelle für eine Verbindung zum SB-Terminal. Diese Schnittstelle ist in der Regel eine USB-Schnittstelle (Universal Serial Bus), nach allen möglichen Spezifikation (USB 1.0,2.0,3.0 etc.) oder über eine Firewire etc. Es kann sich jedoch auch um eine kabellose Schnittstelle handeln.

Ferner umfasst der Sicherheitstoken Authentifizierungsinformationen. Diese Authentifizierungsinformation sind zusätzliche Informationen, die nicht unbedingt identisch sein müssen zu denjenigen, die die Funktionalität des Sicherheitstoken implementieren. Sie können jedoch identisch sein und beide Funktionen übernehmen. Die beanspruchten Authentifizierungsinformationen, dienen zur Kontrolle des Zugriffs auf eine zweite Schnittstelle, die einen Anschluss eines Speichersticks erlaubt, dessen Inhalt dem SB-Terminal zur Verfügung gestellt wird, wobei der Zugriff auf den Speicherstick in Abhängigkeit von den Authentifizierungsinformationen erfolgt. Diese zweite Schnittstelle ist in der Regel auch eine USB-Schnittstelle, die vorzugsweise einen USB-Hub bereitstellt, an den ein USB-Speicherstick angeschlossen wird. Ein USB-Hub ist ein USB-Gerät, das das USB-Signal an mehrere Ports verteilt. Es können somit auch mehrere zweite Schnittstellen vorhanden sein.

Die Authentifizierungsinformationen sind zuständig für den Zugriff auf die Schnittstelle, der so gesteuert wird, dass die Schnittstelle zum USB-Speicherstick nur dann zum Lesen und/oder Schreiben freigegeben wird, wenn Lese und/oder Schreib-Authentifizierungsinformationen für diesen Vorgang bereitgestellt werden. So können die Lese und/oder Schreib-Authentifizierungsinformationen durch ein Challenge-Response-Verfahren mit einem über ein Netzwerk verbundenen Server oder dem Benutzer erlangt werden. Der Benutzer wird z.B. am ATM aufgefordert, auf eine Frage die richtige Antwort einzugeben. Auch kann die Challenge-Response-Frage über einen Server erfolgen, an dem der ATM angeschlossen ist. So kann z.B. ein Dritter den Zugriff für den Wartungsingenieur freigeben. Der Dritte sitzt an einem entfernten Server z.B. in einem Rechenzentrum und erhält die Informationen über das Einstecken des USB-Speichersticks, und hat diesen dann freizugeben.

Auch kann ein Zugriff auf den Speicherstick von digitalen Signaturen abhängig gemacht werden, die z.B. auf den Stick abgelegt sind, auch sind biometrische Verfahren denkbar, bei denen z.B. ein Fingerabdruck des Wartungsingenieurs gelesen wird. Hierbei ist ein Fingerabdrucklesegerät in den Token integriert.

In einer weiteren Ausführungsform werden die Daten nur an den Speicherstick weitergeleitet, wenn die Signatur der Daten mit den Authentifizierungsinformationen übereinstimmen, um so das Lesen und/oder Speichern von Daten und insbesondere Dateien aus unsicheren Quellen wirksam zu unterbinden. Hierbei ist es vorstellbar, dass die Überprüfung auf Blockebenen erfolgt oder auf Dateiebene. Bei der Untersuchung auf Blockebene, werden für jeden übertragenen Block, der von dem Speicherstick stammt, eine Überprüfung über den Sicherheitstoken vorgenommen. Jeder Block weist zusätzliche Informationen auf, aus denen die Signatur erkenntlich ist. Alternativ ist es natürlich denkbar, dass jeder Block verschlüsselt ist, und durch die Entschlüsselung erkannt werden kann, ob die Informationen zulässig sind oder nicht. Es ist auch denkbar, dass eine Vielzahl von Blöcken verschlüsselt ist bzw. signiert ist, so dass die Belastung für den Prozessor bzw. die Bearbeitungseinheit auf dem Sicherheitstoken verringert wird. In einer Alternativen Ausführungsform stellt der Sicherheitstoken ein virtuelles Filesystem bereit, das letztendlich eine Abbildung des Filesystems des Speicherssticks ist, wobei nur die Dateien auf dem Filesystem angezeigt werden, die eine zulässig Signatur aufweisen. Es findet somit einer Filterung der Dateien statt, die angezeigt werden können. In einer alternativen Ausführungsform ist es ebenfalls denkbar, dass beim Einstecken des Speichersticks der Kontroller eine Überprüfung aller Dateien bzw. Blöcke, die auf dem Speicher Stick abgespeichert sind, vornimmt, um die zulässigen Dateien zu erkennen, und zukünftig lediglich einen Zugriff auf die Blöcke bzw. Dateien zulässt, deren Authentifizierung erkannt wurde. Um dies zu gewährleisten Bedarf es in der Regel einer Logik auf dem Sicherheitstoken, die das Filesystem des USB-Stick bzw. Speichersticks interpretieren kann, um so zu erkennen, welche Dateien signiert sind bzw. korrekt verschlüsselt sind.

### Figurenbeschreibung:

Im Folgenden werden die Figuren beschrieben:
- Fig. 1: zeigt einen Sicherheitstoken mit einen USB-Anschluss und einem Anschluss für einen USB-Speicherstick;
- Fig. 2: zeigt einen Sicherheitstoken nach Fig. 1 in den ein USB-Speicherstick eingeschoben ist.

### Beschreibung der Figuren:

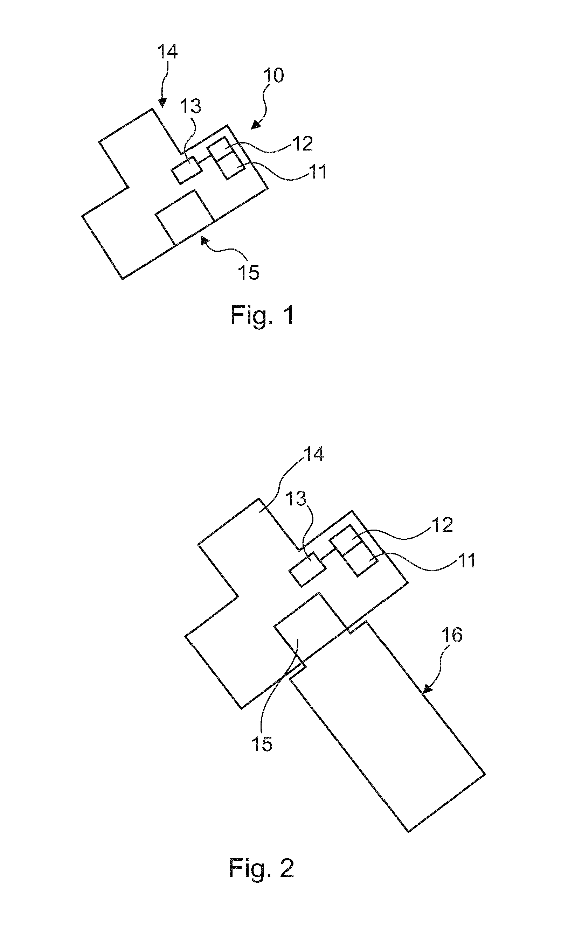

Die Figur 1 zeigt einen Sicherheitstoken 10, der Authentifizierungsinformationen 11 verwaltet. Der Speicher Stick 10 ist in der bevorzugten Ausführungsform eine USB-Variante, die einen USB Stecker 14 aufweist, mit dem der Anschluss an einen Rechner vorgenommen wird. An den Stecker schließt sich ein Gehäuse an. In dem Gehäuse ist zum Anschluss eines Speichersticks eine Buchse 15, die geeignet ist, um einen USB-Speicherstick 16 aufzunehmen, wobei der Kontroller 13 einen USB-Hub bereitstellen kann. Technisch ist der Kontroller 13 in der Lage, den Datenverkehr und die Daten auf dem UBS-Stick zu analysieren.

Die Authentifizierung-Information 11 wird von einer Kontrolleinheit 13 verwaltet, und dient der Steuerung des Zugriffs auf den Speicher-Stick 16. Wie bereits oben beschrieben wurde, wird anhand der AuthentifizierungsInformation, der Lese/Schreibzugriff gesteuert. Ferner sind weitere Authentifizierungs-Informationen 12 abgelegt, die in der Regel den Zugriff auf das SB-Terminal steuern. Lediglich wenn die Authentifizierungsinformationen 12 korrekt sind, lässt das SB-Terminal einen Zugriff auf Komponenten und Software zu. Grundsätzlich ist es nicht ausgeschlossen, dass die Authentifizierung Informationen 11 und 12 identisch sind.

## Patentansprüche

1. Sicherheitstoken für die Authentifizierung eines Zugriffs auf ein SB-Terminal, umfassend eine Schnittstelle für eine Verbindung zum SB-Terminal, umfassend Authentifizierungsinformationen, **gekennzeichnet durch**
eine zweite Schnittstelle, die einen Anschluss eines Speichersticks erlaubt, dessen Inhalt dem SB-Terminal zur Verfügung gestellt wird, wobei der Zugriff auf den Speicherstick in Abhängigkeit von den Authentifizierungsinformationen erfolgt.

2. Der Sicherheitstoken nach dem vorhergehenden Anspruch, wobei die Schnittstellen USB/Universal-Serial-Bus sind.

3. Der Sicherheitstoken nach dem vorhergehenden Anspruch, wobei die zweite Schnittstelle einen USB-Hub bereitstellt, an den ein USB-Speicherstick befestigbar ist.

4. Der Sicherheitstoken nach einem oder mehreren der vorhergehenden Ansprüche, wobei der Zugriff so gesteuert wird, dass die Schnittstelle zum USB-Speicherstick nur dann zum Lesen und/oder Schreiben freigegeben wird, wenn Lese und/oder Schreib-Authentifizierungsinformationen für diesen Vorgang bereitgestellt werden.

5. Der Sicherheitstoken nach dem vorhergehenden Anspruch, wobei die Lese und/oder Schreib-Authentifizierungsinformationen durch ein Challenge-Response-Verfahren mit einem über ein Netzwerk verbundenen Server oder dem Benutzer, und/oder anhand von digitalen Signaturen und/oder biometrischen Verfahren erlangt werden.

6. Der Sicherheitstoken nach einem oder mehreren der vorhergehenden Ansprüche, wobei eine Steuerung, so ausgebildet ist, dass die Daten nur an den Speicherstick weiterleiten, wenn deren Signatur mit den Authentifizierungsinformationen übereinstimmen, um so das Lesen und/oder Speichern von Daten und insbesondere Dateien aus unsicheren Quellen wirksam zu unterbinden.

7. Der Sicherheitstoken nach einem oder mehreren der vorhergehenden Ansprüche, wobei die Daten beim Lesen/oder Schreiben unter Verwendung der Authentifizierungsinformationen entschlüsselt und/oder verschlüsselt werden.
